# EUROPEAN PATENT APPLICATION

(11) **EP 4 664 292 A1**
(43) Date of publication of application: **17.12.2025**
(21) Application number: 24305945.8
(22) Date of filing: 14.06.2024
(51) Int. Cl.: G06F 11/16, G06F 11/07, G06F 11/00, G06F 11/30

(54) **COMPUTER-IMPLEMENTED METHOD OF EXECUTING A MAIN APPLICATION ON A COMPUTER SYSTEM BY PROCESSING DATA, IN PARTICULAR FOR HUMAN MACHINE INTERFACE**

(71) Applicant: ALSTOM Holdings, 93400 Saint-Ouen-sur-Seine (FR)
(72) Inventor: Erriquez, Attilio, 40128 Bologna (IT); Andreana, Maria-Rachele, 40128 Bologna (IT)
(74) Representative: Patentanwälte Bressel und Partner mbB

(57) **Abstract**

The invention relates to a computer-implemented method of executing a main application (32 - 37) on a computer system by processing data, wherein
- a first data processing unit (12) of a main computing unit (10) executes the main application (32 - 37) and
- a safety application is executed on the computer system for monitoring the execution of the main application (32 - 37),

wherein the safety application monitors an actual timing behaviour of the execution of the main application (32 - 37) and compares the actual timing behaviour with information about an expected timing behaviour and determines, based on a predefined criterion, if there is a significant deviation between the actual timing behaviour and the expected timing behaviour, and
wherein, if the safety application has determined that there is a significant deviation, the safety application triggers an action that has been assigned to the significant deviation in advance.

The safety application is executed on a second data processing unit (18) of a module (16) of the computer system, which second data processing unit (18) executes the safety application independently from data processing of the first data processing unit (12) and which module (16) is connected to the main computing unit (10) via a data transfer interface, and actual timing information, that is information about the actual timing behaviour and/or information that allows for determining the actual timing behaviour, is transferred via the data transfer interface to the second data processing unit (18).

## Description

The invention relates to a computer-implemented method of executing a main application on a computer system by processing data and to a computer system comprising a first data processing unit adapted to execute a main application by processing data. "Main" application means that there may be another application that is executed or is to be executed. In particular, the invention is related to the technical field of correctly and timely displaying information, for example on a display of a HMI (Human Machine Interface).

One example of the main application is an application that processes values of a quantity to be displayed on a display of a rail vehicle or of a control center for controlling the operation of a railway network. In particular, the display may be the display of a Human Machine Interface (HMI). Examples of the quantity may be a driving speed of a rail vehicle, a position of a rail vehicle, a quantity representing an operating mode of a rail vehicle, a quantity that is related to a signal of a signaling system of the railway network, aspect, a quantity characterising a vacancy of a track of the railway network, a quantity defining the state of a turnout of the railway network, a quantity defining the state of a level crossing of the railway network, a quantity indicating if movement of a rail vehicle is authorized or not and a quantity defining restrictions of the driving speed of a rail vehicle.

In particular if the main application is an application which is executed in connection with the operation of a HMI and/or display in the technical field of railways and/or rail vehicles, the main application may be adapted to process data comprising information about an operating state of a vehicle, in particular a rail vehicle, to be displayed on a display. In addition or alternatively, the main application may be adapted to check if this information is correct. Particularly to double-check if the information to be displayed is correct is important for reliable operation and may be required to fulfil a corresponding safety level (SIL).

It is important that the respective values of these quantities are displayed according to a defined timing schedule. In particular, the maximum time interval between the detection of a new, updated value of the respective quantity and the display of the updated value may be predefined and is to be observed. Otherwise, a person who is viewing the display may not be informed about the correct value of the quantity and may take a decision based on outdated information. In addition, the displayed value may not be valid or may not be valid any more.

There may be various reasons for the failure to meet the timing schedule, e.g. an error in the clock of the computer that executes the application, other hardware problems such as problems with the power supply of the computer and/or overloading of the computer with additional computing tasks.

The present invention may in particular comprise any combination of the above-mentioned features, may relate to the above-mentioned technical field and/or the main application may be one of the applications mentioned above.

Conventional approaches aim to reduce the likelihood of a failure of components of the computer system, in particular of the components power supply, CPU & RAM, storage and clock, by using two or more fully independent computational channels, with impacts on costs and leading to additional constraints on Commercial Off The Shelf (COTS) Hardware. Another approach is to develop and use dedicated specialised hardware (including virtualised hardware, such as by executing cloud-implemented software) and/or software for increasing safety.

It is an object of the present invention, to provide a computer-implemented method and/or a computer system of the kind mentioned above which improve(s) the safety that a result of the execution of the main application fulfils a predetermined requirement.

The present invention, rather than using two or more fully independent computational channels, is based on a concept which can be named "reactive architecture", which allows to use a single computational channel for the main application. This does not exclude the option of having redundant components of the computer system that allow for executing the main application on different sets of components. However, the redundant sets of components are typically used only one at a time. If one of the sets fails, the other set can be used. Therefore, the optional redundant components are present to increase availability of the computer system.

A functionally/physically independent reactive component is proposed to be used in order to increase safety. "Independent" in particular means that the component is a component separate from and present in addition to the first data processing unit that executes the main application and, furthermore, in addition to a hardware unit, such as a computer, that comprises the first data processing unit. It is proposed to execute on the component a safety application that monitors an actual timing behaviour of the execution of the main application and to compare the actual timing behaviour with information about an expected timing behaviour. Then, based on a predefined criterion, it is determined if there is a significant deviation between the actual timing behaviour and the expected timing behaviour. If the safety application has determined that there is a significant deviation, the safety application triggers an action that has been assigned to the significant deviation in advance.

While the main application is executed by a first data processing unit of a computer system by processing data, the safety application is executed on a second data processing unit of a module (also named "safety module") of the computer system. The second data processing unit executes the safety application independently from data processing of the first data processing unit and the module is connected to the first data processing unit via a data transfer interface. Actual timing information, that is information about the actual timing behaviour and/or information that allows for determining the actual timing behaviour, is transferred via the data transfer interface to the second data processing unit. The actual timing information may be output by the first data processing unit, by a different unit of the computer comprising the first data processing unit or by a unit that is not part of the computer comprising the first data processing unit and not part of the module. In any case, the actual timing information represents the actual timing of the execution of the main application.

In particular, the safety application may determine during execution of the safety application once, repeatedly or continuously reference information which allows for determining if the actual timing behaviour is in order or faulty. One example is that both the execution of the main application and the execution of the safety application are based on in each case a separate clock signal. For example, the safety application may compare its own clock signal (or any information derived from the clock signal) with the clock signal (or any information derived from the clock signal) of the main application. It should be noted that the clock signal of the respective application is technically speaking the clock signal of the data processing unit or of any larger unit comprising the respective data processing unit. Another example is that the safety application may be adapted to execute at least parts of the main application on its own while the main application is executed. This allows the safety application to determine differences between the timing behaviour of the at least parts of the main application executed by itself with the timing behaviour of the main application.

Optionally, the main application may be adapted to be operated in a non-safe mode or in a mode having a lower safety level and in this mode the main application may check itself if there is a significant deviation of the actual timing behaviour from the expected timing behaviour. This means that the safety application is not present or not executed in this mode.

More generally speaking, the information about the actual timing behaviour may be indirect information like information on the clock signal (to be produced by a clock unit) for operating the first data processing unit. Alternatively, it may be direct information, in particular information based on a computation result produced by the main application, such as a time stamp (produced by the main computer) of the computation result or such as receiving the computation result from the main computer and determining the time of reception.

The kind of information about the expected timing behaviour may depend on the type of information about the actual timing behaviour. For example, in case of monitoring a clock signal of the first data processing unit, the module that comprises the second data processing unit may also comprise a clock and may be adapted to compare its own clock signal with the clock signal of the first data processing unit. There may be a threshold value, in particular a predefined threshold value, for a maximum deviation between the two clock signals. There are different ways of examining the deviation. One example is to compare the times when the clock impulses of each pair of the different clocks occur. There may be a time offset between the clock impulses of the respective pair and this does not necessarily mean that there is a deviation indicating an undesired actual timing behaviour. For example, if the time offset is constant over time for the consecutive pairs of clock impulses, there is no indication of an undesired actual timing behaviour. However, if the time offset drifts away over time, i.e. if the time offset increases or decreases, this change of the time offset may exceed the threshold value. It is not necessarily required that the clock signal of the first data processing unit is compared with a clock signal of the safety module. For example, the safety module may have access to the information about the time interval of the clock cycle of the first data processing unit during regular operation. In other words, this time interval shall be constant and shall have a certain, expected value. Then, the safety module can compare at least one of the actual time intervals, and preferably a series of consecutive time intervals, in order to determine if the time interval(s) deviate(s) from the expected time interval.

The mentioned action that is triggered in case of a significant deviation, may be an action taken by the module or by any other part of the computer system. Examples of the action are output of a warning, preventing output of a result of executing the main application and/or modifying the result of executing the main application, in particular intentionally invalidating the result. Invalidating might be achieved, for example, by corrupting and/or intentionally amending a checksum that may be the result. In addition or alternatively, an output comprising a result of executing the main application may be negated by action of the safety module if there is a significant deviation. By performing such a negation, the same way of taking an action in case of a fault is achieved as in case of the conventional way mentioned above of performing at least two independent computational channels.

It is preferred that the main application is involved in the action that is triggered by the safety application. In particular, a numerical coded value is output by the safety application and is transferred to the main application. The numerical coded value depends on the question if if there is a significant deviation between the actual timing behaviour and the expected timing behaviour. Therefore, "coded" means that the value of the numerical calls value has a meaning according to a defined code. If there is a significant deviation, a different numerical coded value is transferred to the main application than in case there is no significant deviation. The numerical coded value is received by the main application and affects the output of data by the main application. "Affect" includes that the output of a computational result of the main application is prohibited. Alternatively, the computational result of the main application is output in any case, if there is a significant deviation or not, but the numerical coded value in case there is a significant deviation modifies the computational result and/or causes that additional information is output together with the computational result. For example, the computational result may be considered as an output message and an additional checksum is output together with the output message. The checksum value depends on the numerical coded value. If there is a significant deviation the corresponding numerical coded value causes the checksum to have a value that indicates that there is the significant deviation. The concept of transferring a numerical coded value, that depends on the answer to the question if there is a significant deviation, has the advantage that any output based on a computational result of the main application can safely be influenced. In particular, the concept of the coded numerical value has the advantage that it can be independent from a time monitoring performed by the main application. In addition, an invariance of results compared to specific configuration data of the main application can be achieved.

In particular, there may be a predefined routine of data processing implemented in the main application and an output produced by this predefined routine depends on the numerical coded value that is generated by the safety application, output to the main application and received by the main application. The output of the predefined routine controls performing the action that has been assigned to the significant deviation in advance. To be precise the action is taken if there is a significant deviation and, as a result, the corresponding numerical coded value is generated by the safety application and is transferred to the main application. In this manner, a safe routine of handling the significant deviation is realised.

The output of the computational result of the main application, in particular the message mentioned above, may be modified and/or additional data may be added to the output, if there is a significant deviation. Optionally, additional data may also be added if there is no significant deviation, but in this case the additional data differ from the additional data in case of a significant deviation. As mentioned above, the additional data may be a checksum and the value of the checksum defines if there is a significant deviation or not. Alternatively, there may be no additional data, but the output of the computational result of the main application may be modified in case there is a significant deviation. For example, the output of the computational result may be an image or part of an image to be displayed by an HMI. In case of the significant deviation, the image or part of the image is modified so that a spectator who is viewing the image recognises the fact that the image or part of the image is not as expected. For example, the image may be modified by distorting its content. If the main application provides an output according to the computational result in case of no significant deviation, this output may be at least partially prevented to be transferred to its recipient in case of a significant deviation. For example in case of a checksum being at least part of the output, the output of the checksum may be jammed.

The recipient of the output from the main application can be another data processing application run by the same data processing unit as the main application, i.e. run by the first data processing unit of the main computing unit. Alternatively, the other data processing application that receives the output from the main application may be run by a different data processing unit.

In particular, and as mentioned before, the safety application monitors, or is adapted to monitor, a timing behaviour of the main application, to be precise an actual timing behaviour of the execution of the main application. Optionally, there can be a corresponding timing specification that is predetermined and/or is available to the safety application. The timing specification may be specified in form of information stored in a data storage that is accessible to the safety application, respectively to the data processing unit that executes the safety application.

There may be various reasons for a failure to meet the timing specification or to deviate from the correct timing behaviour, e.g. an error in the clock of the main computer, hardware problems such as with the power supply of the main computer, overloading of the main computer with additional computing tasks, interference of the main application with other applications and others.

In more general words, proposed is a computer-implemented method of executing a main application on a computer system by processing data, wherein
- a first data processing unit of a main computing unit executes the main application and
- a safety application is executed on the computer system for monitoring the execution of the main application,

wherein the safety application monitors an actual timing behaviour of the execution of the main application and compares the actual timing behaviour with information about an expected timing behaviour and determines, based on a predefined criterion, if there is a significant deviation between the actual timing behaviour and the expected timing behaviour, and
wherein, if the safety application has determined that there is a significant deviation, the safety application triggers an action that has been assigned to the significant deviation in advance.

This safety application is executed on a second data processing unit of a module of the computer system, which second data processing unit executes the safety application independently from data processing of the first data processing unit and which module is connected to the main computing unit via a data transfer interface. The actual timing information, that is information about the actual timing behaviour and/or information that allows for determining the actual timing behaviour, is transferred via the data transfer interface to the second data processing unit.

A corresponding computer system comprises
- a main computing unit comprising a first data processing unit adapted to execute a main application by processing data,
- a data processing unit adapted to execute a safety application for monitoring the execution of the main application,

wherein the safety application is adapted to monitor an actual timing behaviour of the execution of the main application, to compare the actual timing behaviour with information about an expected timing behaviour and to determine, based on a predefined criterion, if there is a significant deviation between the actual timing behaviour and the expected timing behaviour, and
wherein the safety application is adapted, if it has determined that there is a significant deviation, to trigger an action that has been assigned to the significant deviation in advance.

The computer system comprises a module having a second data processing unit that is adapted to execute the safety application, which second data processing unit is adapted to execute the safety application independently from data processing of the first data processing unit and which module is connected to the main computing unit via a data transfer interface, and the computer system is adapted to transfer actual timing information, that is information about the actual timing behaviour and/or information that allows for determining the actual timing behaviour, to the second data processing unit via the data transfer interface.

Since the second data processing unit executes the safety application independently from data processing of the first data processing unit certain types of faults of executing the main application can be detected which faults cannot be detected when applying the conventional concept of performing the main application using at least two independent computational channels (see above). These certain types of faults relate to the operation of the clock that triggers the cyclically performed computation steps. Each clock impulse or each clock cycle triggers a computation step. If the same clock signal is used for the different independent computational channels, there is a fault that cannot be detected by comparing the outputs of the different channels. However, the present invention not only allows for detecting clock signal faults, but also all kinds of faulty actual timing behaviour of executing the main application.

Another advantage of the present invention is the fact that the main application may be executed on a Commercial Off The Shelf (COTS) hardware, in particular on a COTS computer while the safety module is connected to the COTS hardware.

The predefined criterion may, as mentioned above, be the criterion that a threshold value for the (maximum allowable) deviation between the actual timing behaviour and an expected timing behaviour is exceeded. Depending on the implementation, "exceeded" may include the case that the deviation is equal to the threshold value or may not include this case. A specific example described above referred to the deviation of two different clock signals. However, this concept can be transferred to other types of the actual timing information. The way the predefined criterion is defined may depend on the way the information about the actual timing behaviour is achieved. For example in case of the above-mentioned indirect information about the actual timing behaviour, the second data processing unit may determine that computation results produced by the main application are sometimes delayed and sometimes not. In a specific embodiment, this may be tolerated, i.e. the predefined criterion is not fulfilled, as long as the individual delay does not exceed a first threshold value. On the other hand, if the average, for example the arithmetic mean value, of the delays exceeds a second threshold value, which is in particular smaller than the first threshold value, the predefined criterion may be fulfilled if defined correspondingly. The definition of such a predefined criterion may therefore comprise at least two different threshold values for comparison.

In particular, the threshold value or at least one of the threshold values may be an absolute value, in order to take into account that both a delay as well as a too fast execution of the main application are faults.

On the other hand, the predefined criterion may be defined based on a more sophisticated concept of fault detection. For example, an artificial intelligence (Al) implemented by using the safety module may have been trained to recognise different faulty actual timing behaviour of the execution of the main application. If the Al recognises one of the faulty actual timing behaviours, this fulfils the predefined criterion.

In particular, the data transfer interface may be designed to allow transfer of data according to a corresponding data transfer protocol, such as a USB (Universal Serial Bus) interface, wherein the module receives the actual timing information according to the data transfer protocol and converts (or is adapted to convert) a data format of the actual timing information so that the second data processing unit is capable of using the actual timing information. In the following, the interface is referred to "USB interface" and the corresponding module is referred to "USB module", even if the interface works according to a different data transfer protocol than a USB data transfer protocol.

Not only in case of the safety module being a USB module, it is preferred that the safety module receives the electrical power that is required for operating the safety module from the same apparatus to which the safety module is connected via the data transfer interface for data transfer. In particular an electric connection that realises a USB interface is capable of transferring data and of providing electrical power. An alternative solution for realising the data transfer connection and the power supply connection to the safety module, if the safety module does not comprise a USB interface, comprises an Ethernet RJ45 data transfer connection and a separate direct current power supply connection.

More generally speaking, the data transfer interface may be part of a data and power interface capable of transferring electric power to the module and electric power may be transferred through the data and power interface for operating the module.

According to a preferred embodiment of the method, it is proposed to assign a unique identifier to each article that is adapted to operate as the safety module. The main computing unit that comprises the first data processing unit checks if a specific article that is connected to the main computing unit comprises the unique identifier as expected. This procedure can be named "pairing". In order to enable the main computing unit for checking, the main computing unit comprises information about the unique identifier. If the check fails, execution of the main application is not performed and/or information that the connected specific article does not comprise and/or use the expected unique identifier is output. According to a corresponding specific example of the computer system, the main computing unit is adapted to check if a specific article that is connected to the main computing unit comprises the unique identifier as expected by the main computing unit and wherein the main computing unit is adapted not to perform execution of the main application and/or to an output information that the connected specific article does not comprise and/or use the expected unique identifier. It is preferred that, in particular for security reasons, the unique identifier is stored in a secure storage. In particular, the secure storage is resistant to manipulation. However, there may be the option to set or modify the unique identifier for authorised personnel.

The check for the expected unique identifier can be performed in different ways. One way is that the main computing unit and in particular the first data processing unit sends a request to the module in order to disclose the unique identifier. In return, the module sends the unique identifier to the main computing unit and the track can be performed by comparing the transferred identifier with information about the expected unique identifier. However, it is preferred that the module combines data representing the unique identifier with other data to be transferred to the main computing unit. From the actually transferred data, the unique identifier is not reproducible. Then, the main computing unit can check if the module has used the correct, expected unique identifier by using its own information about the expected unique identifier. There are many data encryption and/or data coding techniques known to a person skilled in the art of data according to which data to be transferred are amended using coding information that is not reproducible from the coded signal.

According to a specific example, data coded by the safety module by using the unique identifier and transferred from the safety module to the first data processing unit is used to initialize data processing of the main application. In other words, the execution of the main application is initialized in this manner. If the initialization produces the predicted result, the first computation unit determines that the correct module associated with the main application is involved. This concept can be further extended if several applications are to be monitored using the same safety module, as will be described with reference to the figures later, for example.

The unique identifier has the advantage that any data that is transferred from the module to the main computing unit cannot be falsified without knowledge about the unique identifier. Since the module is a unit external to the main computing unit this increases safety with respect to attacks performed by hackers.

Preferably, the unique identifier is stored within the module in a manner that prevents unauthorised access from outside of the module. For example, a pass phrase may be required to access the unique identifier. In addition or alternatively, the information stored within the main computing unit about the unique identifier is protected in the same manner. In this way, security against attacks performed by hackers is further increased. further in addition or alternatively, accessing the unique identifier might require confirmation from and/or use of a trusted authority.

Furthermore, it is preferred that the communication with respect to data transfer between the main computing unit and the safety module is encrypted based on asymmetric hashing algorithms (such as according to the Rivest-Shamir-Adleman (RSA) 256 scheme) to realize encryption and authentication.

In addition, it is preferred that, during operation of the computer system while the safety module is connected to the main computing unit, disconnecting the safety module from the main computing unit automatically results in a blocking action performed by the main computing unit. This blocking action preferably includes that the data transfer interface through which the actual timing information is transferred to the safety module and through which the safety module may trigger an action to be performed by the main computing unit is blocked. Furthermore, the blocking action may include instead are alternatively that a message is output indicating the disconnection. In any case, the disconnection automatically stops the safe operation of the main computing unit, so that in particular a required security level is no longer complied with.

The module may be adapted to perform at least one self test, for example regarding the integrity of any coding information and regarding data stored within the module.

Furthermore, the module may comprise a non-volatile memory to store application data (data required to execute any application by the second first data processing unit). In addition are alternatively, a checksum of the application data can be stored in the non-volatile memory. This allows to handle for example a situation in which the power supply to the module fails.

According to an especially preferred embodiment of the method, the safety module provides an application identification number and this application identification number is used to perform at least one consistency check
- of the data processed during execution of the main application,
- of the data processed by the safety module for monitoring the actual timing behaviour of the execution of the main application and/or
- of the data transferred between the main computing unit and the safety module. "Consistency" check means that the data are consistent with the main application. One way of implementing this consistency check in practice is to code data using the application identification number and/or to add the application identification number as an identifier to the respective data. In this manner, it can be prevented that data concerning a different application are used in connection with the execution of the main application. According to a corresponding preferred embodiment of the computer system, the module is adapted to provide an application identification number and to check by using this application identification number to check if
   - data processed during execution of the main application,
   - data processed by the safety module for monitoring the actual timing behaviour of the execution of the main application and/or
   - data transferred between the main computing unit and the safety module is assigned to the main application which is executed by the main computing unit and for which the module monitors the actual timing behaviour. The main computing unit and/are the module may be adapted to output a warning message if there is an inconsistency of the data with the main application, such as at least part of the data is used in connection with a different application and/are such as data of another application is used in connection with the main application. In addition are alternatively to outputting a warning message, the execution of the main application can automatically be stopped.

The apparatus that comprises the first data processing unit may be a computer or an arrangement of computers. The apparatus may, for example, comprise a single computer or a computer network, or may comprise the computer or the computer network. With respect to its mode of operation, the computer or at least one of the computers may be, in particular, an analogue computer, a digital computer, and/or a hybrid computer. With respect to its size and design, it may be, in particular, a smartphone, a personal digital assistant (PDA), a tablet computer, an embedded system (e.g. embedded in the control computer of a coordinate measuring machine), a single- or multi-board computer, a personal computer (PC), a desktop computer, a workstation computer, a host computer or server integrated into a computer network, a thin client computer, a netbook, a notebook, a laptop, a mainframe computer, or a supercomputer, although some of the above types may also be implemented by a single computer such as a multi-board PC. Further, the computer or at least one of the computers may have one or more central processing units (CPU) and/or one or more computational cores per CPU. Also, graphics cards or even other dedicated cards with processing units that are part of a computer may exclusively or in combination with other computers or processing units constitute the means for carrying out the method.

It should also be noted that, although the first data processing unit and/or the second data processing unit is/are preferably caused to execute the respective application according to a computer program, the unit's means for executing the main application may alternatively comprise at least one preferably programmable arrangement (for example, an arrangement of logic gates) implemented by hardware, such as an ASIC (Application-Specific Integrated Circuit), a PLD (Programmable Logic Device) or an FPGA (Field Programmable Gate Array).

In the following, examples and features of the invention are described with reference to the attached figures. The individual figures show:
- Fig. 1: schematically components of a computer system, namely with a first data processing unit which is part of a main computing unit and a safety module that is connected to the first data processing via a data transfer interface,
- Fig. 2: an arrangement of the kind described above with reference to Fig. 1, wherein the safety module is a module that is connected to the main computing unit via a Universal Serial Bus (USB), so that data and power can be transferred by the USB,
- Fig. 3: schematically a plurality of main applications, wherein a safety module is assigned to each of the main applications and
- Fig. 4: a flow diagram illustrating an example of identifying if there is a significant deviation from the expected timing behaviour and of taking a corresponding action.

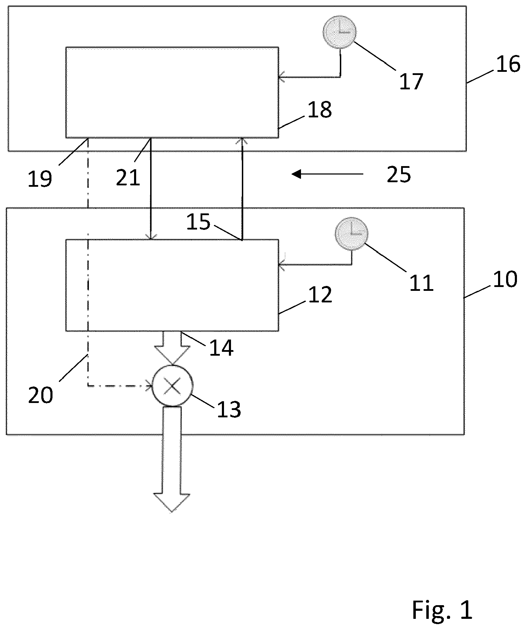

Fig. 1 schematically shows components of a computer system. A first data processing unit 12 is part of a main computing unit 10. The first data processing unit 12 is connected to a safety module 16 via a data transfer interface 25. In particular, the safety module 16 can be disconnected from the first data processing unit 12 so that the data transfer interface 25 is opened. For example, the data transfer interface 25 may be realised as a USB (Universal Serial Bus) interface. The safety module 16 may be a USB stick or a device that is connectable to a corresponding socket of the main computing unit 10 via a USB cable. Alternatively, any other interface and equipment capable of providing data communication and electric power may be used. The safety module 16 comprises a second data processing unit 18.

In the specific embodiments described here, the main computing unit 10 comprises a main clock 11 which is adapted to generate clock signals for initiating in each case one data processing cycle per clock signal to be performed by the first data processing unit. The safety module 16 comprises a safety module clock 17 which is adapted to generate clock signals for initiating in each case one data processing cycle per clock signal to be performed by the second data processing unit and optionally as a reference for comparing the clock signals with the clock signals generated by the main clock. In particular, the timing behaviour of the different clock signals, especially their frequencies and/or any deviation of their periodic occurrence, may be compared/evaluated by the second data processing unit 18.

The second data processing unit 18 comprises a control signal output 19 and a line 20 connects the control signal output 19 with a negation unit 13 which is, in the particular embodiment described here, a part of the main computing unit 10. In the specific example described here, there is no physical line 20. Rather, the line 20 schematically indicates that the safety application run by the second data processing unit 18 influences the output of the first data processing unit 12. Similarly, the negation unit 13 is also not a physical unit, but indicates that an output of the second data processing unit 18 influences the output of the first data processing unit 12. The first data processing unit 12 comprises a main output 14 that is adapted to output results of the data processing performed by the first data processing unit 12.

In the specific embodiment described here, the first data processing unit 12 comprises a clock output which is connected to the second data processing unit 18 for transfer of the clock signal generated by the main clock 11. According to other embodiments, the first data processing unit may comprise an output for transfer of a different signal to the second data processing unit which different signal comprises information about the timing behaviour of the operation of the first data processing unit. For example, time stamps of predefined events, that are the result of the operation, may be transferred in this manner to the second data processing unit.

The safety module 16 may comprise further components, such as a data storage that is accessible to the second data processing unit 18.

According to a specific example of operating the computer system shown in Fig. 1, the first data processing unit 12 executes an application (such as an application involved in the display of information on a human-machine-interface HMI) by data processing. The application may be executed by running a computer program. The timing of data processing cycles that are performed in order to execute the application is triggered/controlled by the clock signal generated by the main clock 11. In addition, the clock signal is output via the clock output 15 to the second data processing unit 18.

The second data processing unit 18 receives not only the clock signal of the main clock 11, but also the clock signal of safety module clock 17. By executing a corresponding application using data processing, the second data processing unit 18 compares the timing of the two different clock signals. If there is a timing difference that is larger than a predefined threshold value, the second data processing unit 18 outputs a numerical coded value via the coded value output 21 to the first data processing unit 12. The numerical coded value depends on the result of the comparison. If there is a timing difference that is larger than the predefined threshold value, a different numerical coded value is output to the first data processing unit 12 than otherwise.

The main application run by the first data processing unit 12 comprises a routine that produces a routine output which depends on the numerical coded value that is received by the first data processing unit 12 from the second data processing unit 18. If the predefined threshold value is exceeded, the numerical coded value has a corresponding value and the routine output reflects this. In particular, the routine output may be an action, i.e. the routine may modify the computational result generated by the main application run by the first data processing unit 12. It is also possible, as mentioned above, that the computational result to be output by the first data processing unit 12 is compromised by additional data. This additional data may be the output of the routine. The action that results, if the second data processing unit 18 has detected a timing difference that is larger than the predefined threshold value, is schematically indicated by the negation unit 13.

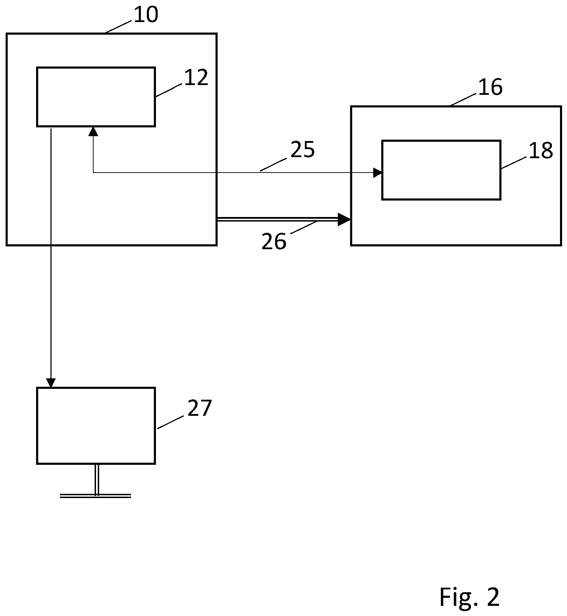

Fig. 2 shows a main computing unit 10 with a first data processing unit 12 and a safety module 16 with a second data processing unit 18. In fact, these units may be the units shown in Fig. 1. The first data processing unit 12 and the second data processing unit 18 are connected to each other via a data transfer interface 25. The arrangement is adapted to transfer data via the data transfer interface 25 in both directions, i.e. the second data processing unit 18 receives during operation the actual timing information (either from the first data processing unit 12 are from a different unit) and the second data processing unit 18 may transfer data to the first data processing unit 12. In addition, there is a power transfer connection 26 from the main computing unit 10 to the safety module 16 and the safety module 16 receives electrical power for its operation by the power transfer connection 26. As shown at the bottom of Fig. 2, the first data processing unit 12 is connected to a computer monitor 27. For example, the main application that is executed by the first data processing unit 12 may produce information that is displayed on the computer monitor 27, in particular time sensitive information.

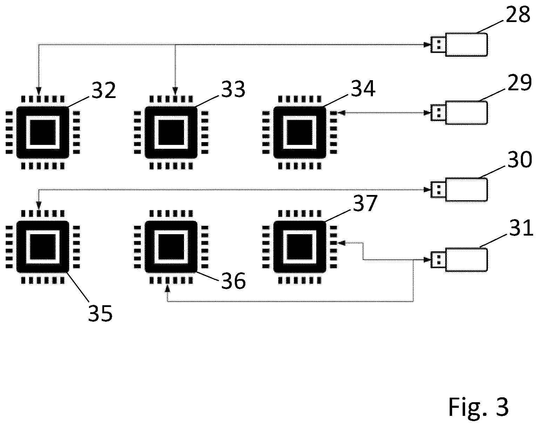

Fig. 3 shows an example of executing a plurality of main applications 32- 37. To each of the main applications 32 - 37, one of a plurality of safety module 28 - 31 is assigned. Two of the safety modules, namely the safety modules 28, 31 are assigned to in each case two of the main applications 32 - 37. The safety module 28 is assigned to the main applications 32 and 33 and the safety module 31 is assigned to the main applications 36 and 37. The safety module 29 is assigned to the main application 34 and the safety module 30 is assigned to the main application 35. Each of the safety modules 28 - 31 monitors the actual timing behaviour of the execution of the main application to which it is assigned.

In addition, according to the specific embodiment described here, the initialisation of the respective main application 32 - 37 is performed, as described above, based on data received from the assigned safety module 28 - 31. These received data have been coded from the assigned safety module 28 - 31 by using the above-mentioned unique identifier of the assigned safety module 28 - 31. In addition, since a safety module can be assigned to different main applications, as it is the case in the embodiment described here with respect to Fig. 3, each assigned safety module provides an application identification number to each main application to which it is assigned. The application identification numbers are chosen to be unique, so that the application identification numbers unambiguously define the respective main application. The application identification numbers are used to distinguish the data of the different main applications from each other. This is particularly useful for the safety modules 28 and 31 which are assigned to a plurality of main applications 32, 33 respectively 36, 37. It may also be useful in a situation, which may apply to the situation shown in Fig. 3, in which a plurality of the main applications 32 - 37 are performed by the same first computation unit.

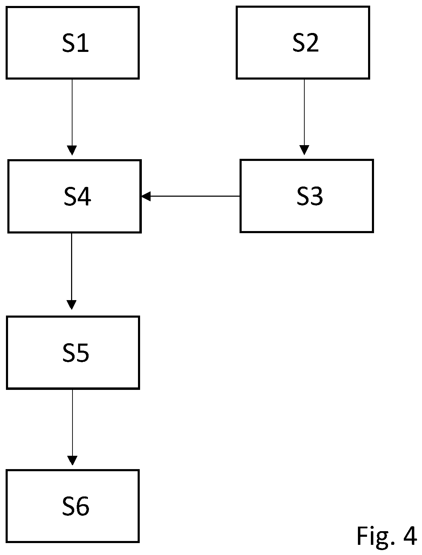

According to the flow diagram shown in Fig. 4, a main application produces a computational result in step S1. While this step S1 is executed, before this step S1 is executed and/or after this step S1 is executed, the main application transfers in step S2 information about its timing behaviour to a safety application run by a separate module. In a step S3 that follows on step S2, the safety application determines if the timing behaviour of the main application is correct or not. Depending on the determination result, the output according to the computational result produced in step S1 is modified and/are supplemented by additional data in step S4. In a specific embodiment, there is no modification of the output and there are no additional data, so that the output according to the computational result produced in step S1 remains as it is in step S4. In other embodiments, additional data is supplemented in step S4. In a following step S5, the output according to step S4 is transferred to another data processing application, which processes the received output according to step S4 in a following step S6. For example, the other data processing application may be an application of a HMI and may display an image according to the received output. If the timing behaviour is not correct, the image may be distorted and/or may comprise a corresponding message, so that a user (such as a spectator) immediately recognises that there is a malfunction.

### List of reference signs

- 10: main computing unit
- 11: main clock
- 12: first data processing unit
- 13: negation unit
- 14: main output
- 15: clock output
- 16: safety module
- 17: safety module clock
- 18: second data processing unit
- 19: control signal output
- 20: control signal line
- 21: coded value output
- 25: data transfer interface
- 26: power transfer connection
- 27: computer monitor
- 28 - 31: safety module
- 32 - 37: main application

## Claims

1. A computer-implemented method of executing a main application (32 - 37) on a computer system by processing data, wherein
- a first data processing unit (12) of a main computing unit (10) executes the main application (32 - 37) and
- a safety application is executed on the computer system for monitoring the execution of the main application (32 - 37),
wherein the safety application monitors an actual timing behaviour of the execution of the main application (32 - 37) and compares the actual timing behaviour with information about an expected timing behaviour and determines, based on a predefined criterion, if there is a significant deviation between the actual timing behaviour and the expected timing behaviour, and
wherein, if the safety application has determined that there is a significant deviation, the safety application triggers an action that has been assigned to the significant deviation in advance,
**characterised in that**
the safety application is executed on a second data processing unit (18) of a module (16) of the computer system, which second data processing unit (18) executes the safety application independently from data processing of the first data processing unit (12) and which module (16) is connected to the main computing unit (10) via a data transfer interface, and
actual timing information, that is information about the actual timing behaviour and/or information that allows for determining the actual timing behaviour, is transferred via the data transfer interface to the second data processing unit (18).

2. The method of claim 1, wherein the data transfer interface that is designed to allow transfer of data according to a corresponding data transfer protocol, such as a USB (Universal Serial Bus) interface, and wherein the module (16) receives the actual timing information according to the data transfer protocol and converts a data format of the actual timing information so that the second data processing unit (18) is capable of using the actual timing information.

3. The method of claim 1 or 2, wherein a unique identifier is assigned or has been assigned to each article that is adapted to operate as the module (16), wherein the main computing unit (10) checks if a specific article that is connected to the main computing unit (10) comprises the unique identifier as expected and wherein execution of the main application (32 - 37) is not performed and/or information that the connected specific article does not comprise and/or use the expected unique identifier is output.

4. The method of one of claims 1 to 3, wherein the module (16) provides an application identification number and this application identification number is used to check if
- data processed during execution of the main application (32 - 37),
- data processed by the module (16) for monitoring the actual timing behaviour of the execution of the main application (32 - 37) and/or
- data transferred between the main computing unit (10) and the module (16) is assigned to the main application (32 - 37) which is executed by the main computing unit (10) and for which the module (16) monitors the actual timing behaviour.

5. The method of one of claims 1 to 4, wherein the data transfer interface is part of a data and power interface capable of transferring electric power to the module (16) and electric power is transferred through the data and power interface for operating the module (16).

6. The method of one of claims 1 to 5, wherein, a numerical coded value, that depends on the question if there is a significant deviation between the actual timing behaviour and the expected timing behaviour or not, is output by the safety application and is transferred to the main application.

7. The method of claim 6, wherein a predefined routine of data processing implemented in the main application is performed and an output produced by the predefined routine depends on the numerical coded value that is generated by the safety application, output to the main application and received by the main application, wherein the output produced by the predefined routine controls performing the action that has been assigned to the significant deviation in advance.

8. The method of one of the preceding claims, wherein a unique identifier is assigned or has been assigned to each article that is adapted to operate as the module (16), wherein the main computing unit (10) checks if a specific article that is connected to the main computing unit (10) comprises the unique identifier as expected and wherein execution of the main application (32 - 37) is not performed and/or information that the connected specific article does not comprise and/or use the expected unique identifier is output.

9. A computer system comprising
- a main computing unit (10) comprising a first data processing unit (12) adapted to execute a main application (32 - 37) by processing data,
- a data processing unit adapted to execute a safety application for monitoring the execution of the main application (32 - 37),
wherein the safety application is adapted to monitor an actual timing behaviour of the execution of the main application (32 - 37), to compare the actual timing behaviour with information about an expected timing behaviour and to determine, based on a predefined criterion, if there is a significant deviation between the actual timing behaviour and the expected timing behaviour, and
wherein the safety application is adapted, if it has determined that there is a significant deviation, to trigger an action that has been assigned to the significant deviation in advance,
**characterised in that**
the computer system comprises a module (16) having a second data processing unit (18) that is adapted to execute the safety application, which second data processing unit (18) is adapted to execute the safety application independently from data processing of the first data processing unit (12) and which module (16) is connected to the main computing unit (10) via a data transfer interface, and
the computer system is adapted to transfer actual timing information, that is information about the actual timing behaviour and/or information that allows for determining the actual timing behaviour, to the second data processing unit (18) via the data transfer interface.

10. The computer system of the preceding claim, wherein the data transfer interface is designed to allow transfer of data according to a corresponding data transfer protocol, and is for example a USB (Universal Serial Bus) interface, and wherein the module (16) is adapted to receive the actual timing information according to the data transfer protocol and to convert a data format of the actual timing information so that the second data processing unit (18) is capable of using the actual timing information.

11. The computer system of one of the preceding claims, wherein the main computing unit (10) is adapted to check if a specific article that is connected to the main computing unit (10) comprises the unique identifier as expected by the main computing unit (10) and wherein the main computing unit (10) is adapted not to perform execution of the main application (32 - 37) and/or to an output information that the connected specific article does not comprise and/or use the expected unique identifier.

12. The system of one of the preceding claims, wherein the module (16) is adapted to provide an application identification number and to check by using this application identification number to check if
- data processed during execution of the main application (32 - 37),
- data processed by the module (16) for monitoring the actual timing behaviour of the execution of the main application (32 - 37) and/or
- data transferred between the main computing unit (10) and the module (16) is assigned to the main application (32 - 37) which is executed by the main computing unit (10) and for which the module (16) monitors the actual timing behaviour.

13. The system of one of the preceding claims, wherein the data transfer interface is part of a data and power interface capable of transferring electric power to the module (16)

## Amended claims

### Amended claims in accordance with Rule 137(2) EPC.

1. A computer-implemented method of executing a main application (32 - 37) on a computer system by processing data, wherein the main application produces a computational result that is to be output and wherein
- a first data processing unit (12) of a main computing unit (10) executes the main application (32 - 37) and
- a safety application is executed on the computer system for monitoring the execution of the main application (32 - 37),
wherein the safety application monitors an actual timing behaviour of the execution of the main application (32 - 37) and compares the actual timing behaviour with information about an expected timing behaviour and determines, based on a predefined criterion, if there is a significant deviation between the actual timing behaviour and the expected timing behaviour, and
wherein, if the safety application has determined that there is a significant deviation, the safety application triggers an action that has been assigned to the significant deviation in advance,
**characterised in that**
the safety application is executed on a second data processing unit (18) of a module (16) of the computer system, which second data processing unit (18) executes the safety application independently from data processing of the first data processing unit (12) and which module (16) is connected to the main computing unit (10) via a data transfer interface,
actual timing information, that is information about the actual timing behaviour and/or information that allows for determining the actual timing behaviour, is transferred via the data transfer interface to the second data processing unit (18) and
if there is the significant deviation, an output of the computational result of the main application is modified and/or additional data is added to the output.

2. The method of claim 1, wherein the data transfer interface that is designed to allow transfer of data according to a corresponding data transfer protocol, such as a USB (Universal Serial Bus) interface, and wherein the module (16) receives the actual timing information according to the data transfer protocol and converts a data format of the actual timing information so that the second data processing unit (18) is capable of using the actual timing information.

3. The method of claim 1 or 2, wherein a unique identifier is assigned or has been assigned to each article that is adapted to operate as the module (16), wherein the main computing unit (10) checks if a specific article that is connected to the main computing unit (10) comprises the unique identifier as expected and wherein execution of the main application (32 - 37) is not performed and/or information that the connected specific article does not comprise and/or use the expected unique identifier is output.

4. The method of one of claims 1 to 3, wherein the module (16) provides an application identification number and this application identification number is used to check if
- data processed during execution of the main application (32 - 37),
- data processed by the module (16) for monitoring the actual timing behaviour of the execution of the main application (32 - 37) and/or
- data transferred between the main computing unit (10) and the module (16) is assigned to the main application (32 - 37) which is executed by the main computing unit (10) and for which the module (16) monitors the actual timing behaviour.

5. The method of one of claims 1 to 4, wherein the data transfer interface is part of a data and power interface capable of transferring electric power to the module (16) and electric power is transferred through the data and power interface for operating the module (16).

6. The method of one of claims 1 to 5, wherein, a numerical coded value, that depends on the question if there is a significant deviation between the actual timing behaviour and the expected timing behaviour or not, is output by the safety application and is transferred to the main application.

7. The method of claim 6, wherein a predefined routine of data processing implemented in the main application is performed and an output produced by the predefined routine depends on the numerical coded value that is generated by the safety application, output to the main application and received by the main application, wherein the output produced by the predefined routine controls performing the action that has been assigned to the significant deviation in advance.

8. The method of one of the preceding claims, wherein a unique identifier is assigned or has been assigned to each article that is adapted to operate as the module (16), wherein the main computing unit (10) checks if a specific article that is connected to the main computing unit (10) comprises the unique identifier as expected and wherein execution of the main application (32 - 37) is not performed and/or information that the connected specific article does not comprise and/or use the expected unique identifier is output.

9. A computer system comprising
- a main computing unit (10) comprising a first data processing unit (12) adapted to execute a main application (32 - 37) by processing data, wherein the main application produces a computational result that is to be output,
- a data processing unit adapted to execute a safety application for monitoring the execution of the main application (32 - 37),
wherein the safety application is adapted to monitor an actual timing behaviour of the execution of the main application (32 - 37), to compare the actual timing behaviour with information about an expected timing behaviour and to determine, based on a predefined criterion, if there is a significant deviation between the actual timing behaviour and the expected timing behaviour, and
wherein the safety application is adapted, if it has determined that there is a significant deviation, to trigger an action that has been assigned to the significant deviation in advance,
**characterised in that**
the computer system comprises a module (16) having a second data processing unit (18) that is adapted to execute the safety application, which second data processing unit (18) is adapted to execute the safety application independently from data processing of the first data processing unit (12) and which module (16) is connected to the main computing unit (10) via a data transfer interface,
the computer system is adapted to transfer actual timing information, that is information about the actual timing behaviour and/or information that allows for determining the actual timing behaviour, to the second data processing unit (18) via the data transfer interface and
an output of the computational result of the main application is modified and/or additional data is added to the output, if there is the significant deviation.

10. The computer system of the preceding claim, wherein the data transfer interface is designed to allow transfer of data according to a corresponding data transfer protocol, and is for example a USB (Universal Serial Bus) interface, and wherein the module (16) is adapted to receive the actual timing information according to the data transfer protocol and to convert a data format of the actual timing information so that the second data processing unit (18) is capable of using the actual timing information.

11. The computer system of one of the preceding claims, wherein the main computing unit (10) is adapted to check if a specific article that is connected to the main computing unit (10) comprises the unique identifier as expected by the main computing unit (10) and wherein the main computing unit (10) is adapted not to perform execution of the main application (32 - 37) and/or to an output information that the connected specific article does not comprise and/or use the expected unique identifier.

12. The system of one of the preceding claims, wherein the module (16) is adapted to provide an application identification number and to check by using this application identification number to check if
- data processed during execution of the main application (32 - 37),
- data processed by the module (16) for monitoring the actual timing behaviour of the execution of the main application (32 - 37) and/or
- data transferred between the main computing unit (10) and the module (16) is assigned to the main application (32 - 37) which is executed by the main computing unit (10) and for which the module (16) monitors the actual timing behaviour.

13. The system of one of the preceding claims, wherein the data transfer interface is part of a data and power interface capable of transferring electric power to the module (16)
